# EUROPÄISCHE PATENTSCHRIFT

(11) **EP 1 335 141 B1**
(45) Veröffentlichungstag und Bekanntmachung des Hinweises auf die Patenterteilung: **02.11.2005**
(21) Anmeldenummer: 03002983.9
(22) Anmeldetag: 11.02.2003
(51) Int. Cl.: F16B 37/06

(54) **Verfahren zur Anbringung eines stiftartigen Elements, Zusammenbauteil und Zentrierstift**
Method of fixing a pin-shaped element, an assembly part and an alignment pin
Méthode pour la fixation d'un element en forme de tige, un element d'assemblage et broche d'alignement

(30) Priorität: 12.02.2002 DE 10205683
(43) Veröffentlichungstag der Anmeldung: 13.08.2003
(73) Patentinhaber: Profil Verbindungstechnik GmbH & Co. KG, 61381 Friedrichsdorf (DE)
(72) Erfinder: Humpert, Richard, Dr., 61191 Rosbach v.d.H. (DE); Müller, Bernd, 63526 Erlensee (DE); Vieth, Michael, 61118 Bad Vilbel (DE)
(74) Vertreter: Manitz, Finsterwald & Partner GbR

(56) Entgegenhaltungen:
- WO-A-97/03297
- DE-U- 9 115 382
- DE-U- 9 321 296
- US-A- 2 685 320

## Beschreibung

Die vorliegende Erfindung betrifft ein Verfahren zur Anbringung eines stiftartigen Elements, z.B. eines Zentrierstifts oder eines Bolzenelements in ein Bauteil, beispielsweise in Form einer Platte oder eines Wandabschnitts eines Gehäuses, wobei das stiftartige Element einen Kopfteil mit einer größeren Querabmessung und eine Stirnseite sowie einen Schaftteil mit einer kleineren Querabmessung aufweist und der Kopfteil über eine sich zumindest im allgemeinen radial erstreckende Anlagefläche in den Schaftteil übergeht. Weiterhin betrifft die Erfindung ein Zusammenbauteil bestehend aus einem stiftartigen Element und einem Bauteil. Die Erfindung bezieht sich außerdem auf einen Zentrierstift.

Ein Verfahren bzw. ein Zusammenbauteil der eingangs genannten Art geht aus der DE 93 212 96 U 1 hervor. In dieser Schrift wird das stiftartige Element als Senkkopfschraube ausgelegt und mit einem Blechteil mit einer vorherigen konusförmigen Blechanstellung zusammengebracht, wobei die konusförmige Blechanstellung flach gepresst, die konusförmige Unterseite der Senkkopfschraube, die mit Drehsicherungsnasen versehen ist, in eine entsprechend geformte konusförmige Vertiefung des Blechteils zur Anlage kommt und Blechmaterial durch die Flachpressung der Blechanstellung in eine Ringnut vorschoben wird, die unmittelbar unterhalb des konusförmigen Senkkopfes der Schraube vorgesehen ist.

Das Element ist ausgelegt für Blechdicken, die in etwa die axiale Höhe des Kopfteils des Elementes aufweisen. Die Blech-/Elementverbindung ist gegen Auspresskräfte, die vom Gewindeende des Elementes in Richtung auf den Kopfteil des Elementes zu wirken, nicht sehr widerstandsfähig, da nur relativ wenig Material in der Ringnut vorliegt. Es ist in dieser Schrift kein Vorschlag zu finden, dass das Element auch als Zentrierstift ausgebildet sein könnte.

Von einem Zentrierstift wird üblicherweise erwartet, dass er große Scherkräfte aufnehmen kann und dass beim Zusammenfügen des Bauteils mit dem Zentrierstift mit einem anderen Bauteil die Auspresskräfte, die auf dem Zentrierstift arbeiten, nicht zu einer Lockerung des Zentrierstiftes im Bauteil bzw. zu einer Herauspressung des Zentrierstiftes aus dem Bauteil führen dürfen.

Aufgabe der vorliegenden Erfindung ist es, ein Verfahren der eingangs genannten Art sowie ein Zusammenbauteil vorzusehen, bei dem ein Zentrierstift in einer dicken Platte bzw. in einem dickwandigen Bauteil eingebracht werden kann, wobei das im Bauteil eingebrachte Element hohe Scherkräfte aufnehmen kann und einen guten Widerstand gegen Auspresskräfte aufweist und das Verfahren relativ einfach durchzuführen sein soll.

Um diese Aufgabe zu lösen, wird verfahrensmäßig vorgesehen, dass ein Element ausgewählt wird mit einer axialen Länge des Kopfteils, die deutlich kleiner ist als die Dicke des Bauteils an der Stelle der Anbringung des stiftartigen Elements, dass eine Stufenbohrung im Bauteil erzeugt wird mit einem ersten Bereich größeren Durchmessers, der den Kopfteil des Elements aufnimmt und einem zweiten Bereich, der den Schaftteil aufnimmt und einen Durchmesser aufweist, der gleich groß oder geringfügig kleiner ist als der Durchmesser des Schaftteils, wobei der erste Bereich der Stufenbohrung eine Tiefe hat, die gleich groß oder etwas größer ist als eine Längenabmessung des Kopfteils von der Stirnseite zu der Anlagefläche und dass im Randbereich des Bauteils um die Öffnung des Bereichs der Stufenbohrung größeren Durchmessers mindestens eine Kerbe durch Materialverformung eingebracht wird, die zu einer Verschiebung von Material des Bauteils an mindestens einer Stelle über die Stirnseite des Elements führt und das Element auf diese Weise im Bauteil in axialer Richtung sichert.

Ein entsprechendes Zusammenbauteil zeichnet sich dadurch aus, dass der Kopfteil des Elementes eine axiale Länge aufweist, die deutlich kleiner ist als die Dicke des Bauteils an der Stelle der Anbringung des stiftartigen Elements, dass im Bauteil eine Stufenbohrung vorgesehen ist mit einem ersten Bereich größeren Durchmessers, der den Kopfteil des Elements aufnimmt und einem zweiten Bereich, der den Schaftteil aufnimmt und einen Durchmesser aufweist, der dem Durchmesser des Stiftteils entspricht, wobei der erste Bereich der Stufenbohrung eine Tiefe hat, die gleich groß oder etwas größer ist als eine Längenabmessung des Kopfteils von der Stirnseite zu der Anlagefläche und dass im Randbereich des Bauteils um die Öffnung des Bereiches der Stufenbohrung größeren Durchmessers mindestens eine durch Materialverformung erzeugte Kerbe vorliegt und benachbart zur Kerbe Material des Bauteils über die Stirnseite des Elements sich erstreckt und das Element auf diese Weise im Bauteil in axialer Richtung sichert.

Ferner betrifft die Erfindung einen Zentrierstift mit den Merkmalen des Anspruches 19 bei Anwendung in einem oben genannten Verfahren bzw. Zusammenbauteil.

Dadurch, dass die sich zumindest im Wesentlichen radial erstreckende Anlagefläche des Kopfteils des Elementes an der abgesetzten Schulter der Stufenbohrung anliegt, ist eine Bewegung des Elementes durch das Bauteil hindurch nicht zu befürchten, und zwar auch dann nicht, wenn es als Bolzenelement realisiert ist.

Durch die Verformung des Materials des Bauteils im Bereich der Kerbe soll das verformte Material die Stirnseite des Bolzenelementes zumindest an einer Umfangsstellung überlappen, das Element ist daher so im Bauteil befestigt, dass die Gefahr, dass das Element aus dem Bauteil herausgedrückt wird, nicht mehr zu befürchten ist.

Die genannte Konstruktion, d.h. das durch das Element und das Zusammenbauteil gebildete Zusammenbauelement, ist imstande, hohe Scherkräfte aufzunehmen, die auf das Element ausgeübt werden.

Die Anbringung des Elementes an das Bauteil erfordert nur die Herstellung einer Stufenbohrung und einen anschließenden Pressvorgang, um das Element formschlüssig im Bauteil zu fixieren.

Wenn das Element als Bolzenelement ausgebildet ist und eine Verdrehsicherung erforderlich ist, so kann dies dadurch erfolgen, dass entweder der Kopfteil und/oder der Schaftteil des Elementes im Bereich des Bauteils mit sich in axialer Richtung erstreckenden Kanten und/oder Nuten versehen wird, die beim Einpressen in die Stufenbohrung durch Verdrängung von Material des Bauteils zu einer formschlüssigen Verbindung mit dem Bauteil führen. Alternativ oder zusätzlich dazu kann bei der Verformung des Materials des Bauteils bei der Ausbildung der Kerbe(n) auch der Kopfteil des Elements stellenweise mit verformt werden, um eine Verdrehsicherung zu bilden.

An dieser Stelle soll kurz auf die US-A-2,685,320 hingewiesen werden, die eine Schraubverbindung zwischen zwei Bauteilen zeigt. Dabei wird eine Schraube in Form eines Bolzens mit einem Kopfteil und einem Schaftteil vorgesehen, wobei der Kopfteil in einem ersten Bereich einer Stufenbohrung im ersten Bauteil aufgenommen wird. Die axiale Länge des Kopfteils nimmt etwa zwei Drittel der Dicke des ersten Bauteils ein und der obere Bereich des Kopfteils ist mit einer axialen Verzahnung versehen, die sich in den Randbereich der Stufenbohrung eingräbt und Material nach unten schiebt, das in einer unterhalb der Verzahnung versehenen Ringnut des Kopfteils aufgenommen wird. Hierdurch wird eine relativ komplexe Formgebung des Kopfteils erforderlich und die Problematik der Unterbringung des von der Verzahnung weg geschabten Materials ist nicht zufrieden stellend gelöst.

Bevorzugte Ausführungsformen des erfindungsgemäßen Verfahrens bzw. des Zusammenbauteils bzw. des Elementes gehen aus den Unteransprüchen sowie aus der nachfolgenden Beschreibung eines bevorzugten Ausführungsbeispiels hervor. In der Zeichnung zeigen:
- Fig. 1: einen Querschnitt durch ein Bauteil im Bereich einer dort vorgesehenen Stufenbohrung,
- Fig. 2: eine Darstellung ähnlich der der Fig. 1, jedoch mit einem Zentrierstift, der in der Stufenbohrung eingebracht worden ist und
- Fig. 3: in einem großen Maßstab eine Darstellung der gefügten Anordnung des Zentrierstifts und des Bauteils im Bereich der Stirnseite des Bauteiles.

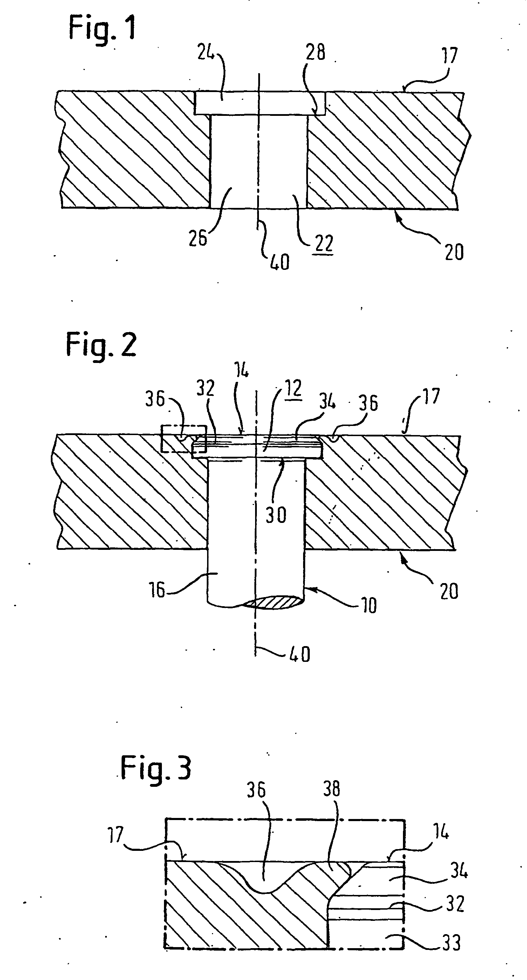

Bezug nehmend auf die Figuren ist aus der Fig. 2 ersichtlich, dass ein stiftartiges Element 10, hier in Form eines Zentrierstiftes, einen Kopfteil 12 mit einer größeren Querabmessung und eine Stirnseite 14 sowie einen Schaftteil 16 mit einer kleineren Querabmessung aufweist, wobei in der Darstellung gemäß Fig. 2 der Schaftteil nicht in voller Länge, sondern abgeschnitten gezeigt ist. Bei einem Zentrierstift wird üblicherweise ein kreiszylindrischer Schaftteil 16 vorgesehen, der in einem Stirnende mit einer Fase (nicht gezeigt) endet, damit der Zentrierstift bei Anbringung des Bauteils mit dem Zentrierstift an ein weiteres Bauteil aufgrund der Fase mit einer im weiteren Bauteil vorgesehenen Bohrung ausgerichtet wird.

In der Darstellung der Fig. 2 liegt das obere Ende der Stirnseite 14 des Elementes 10 bündig mit der dem Schaftteil 16 abgewandten Seite 17 des Bauteils 20. Wie auch aus Fig. 1 zu sehen ist, befindet sich das Element 10 in einer abgestuften Bohrung 22 des Bauteils 20. Die abgestufte Bohrung 22 weist einen ersten Bereich 24 größeren Durchmessers auf, der, wie in Fig. 2 gezeigt, den Kopfteil 12 des Elementes aufnimmt. Ferner weist die abgestufte Bohrung 22 einen zweiten Bereich 26 auf mit einem Durchmesser, der gleich groß oder geringfügig kleiner ist als der Durchmesser des Schaftteils 16 des Elementes 10. Der erste Bereich der Stufenbohrung hat eine Tiefe zwischen der Seite 17 des Bauteils und der abgesetzten Fläche bzw. Schulter 28 der Stufenbohrung, die der maximalen Länge des Kopfteils 12 des Elementes, d.h. zwischen der Auflagefläche 30 des Elementes und der in Fig. 2 obersten Fläche der Stirnseite 14 des Elementes, entspricht. Auf diese Weise liegt die Stirnseite 14 bündig mit der Oberseite 17 des Bauteils. Wie ebenso aus Fig. 2 ersichtlich, weist das Kopfteil 12 des Elementes 10 eine leicht gerundete Schulter 32 auf, die von einer Seitenwand 33 des Kopfteils in eine konusförmige Fläche 34 übergeht, die schließlich an der Stirnseite 14 endet. Die axiale Länge des Kopfteils 12 zwischen der sich zumindest im Wesentlichen radial erstreckenden Anlagefläche 30, die an der abgesetzten Fläche 28 der Stufenbohrung sitzt und der gerundeten Ringschulter 32, ist somit kleiner als die Tiefe des ersten Bereiches der Stufenbohrung. Mit anderen Worten hat der erste Bereich der Stufenbohrung eine Tiefe, die etwas größer ist als die Längenabmessung des Kopfteils von der gerundeten Schulter 32 zu der Anlagefläche 30.

Wie in Fig. 2 ersichtlich, ist in der oberen Seite 17 des Bauteils in einem Randbereich des Bauteils um die Öffnung des ersten Bereiches der Stufenbohrung eine Kerbe 36 vorgesehen, die durch die Einwirkung eines geeigneten Presswerkzeugs auf der Seite 17 des Bauteils erzeugt wird. Bei der Ausbildung der in Fig. 2 ringförmigen Kerbe 36 wird Material aus dem Bauteil 20 verschoben und bildet eine ringförmige Lippe 38, die die gerundete Schulter 32 und die konusförmige Fläche 34 ringförmig überdeckt, wie aus Fig. 3 in einem größeren Maßstab ersichtlich ist. Hierdurch wird der Kopfteil 12 des Elementes in axialer Richtung zwischen der ringförmigen Lippe 38 und der abgesetzten Fläche 28 der Stufenbohrung 22 gehalten und ist somit gegen axiale Auspresskräfte, d.h. Kräfte die in axialer Richtung 40 der Stufenbohrung bzw. des Zentrierstiftes wirken, gesichert.

Das Verfahren zur Herstellung des Zusammenbauteils gemäß Fig. 2 wird auf folgende Weise realisiert. Zuerst wird, üblicherweise durch einen Bohrvorgang, die Stufenbohrung 22 im Bauteil 20 erzeugt. Danach wird mittels eines geeigneten Presswerkzeuges, das beispielsweise durch eine Presse oder durch einen von einem Roboter getragenen C-Gestell mit Pressvorrichtung realisiert werden kann, der Zentrierstift durch eine in Fig. 2 von oben erzeugte Presskraft in die Stufenbohrung 22 hinein gepresst. Hierbei wird das Bauteil 20 auf der Unterseite abgestützt, beispielsweise auf einer Matrize, die den aus dem Bauteil hinausragenden Schafteil 16 aufnimmt, während ein oberes Presswerkzeug auf die Stirnseite des Elementes drückt, bis die Anlagefläche 30 des Elementes 10 zum Anschlag an der abgesetzten Fläche 28 der Stufenbohrung kommt. Mit dem gleichen Presswerkzeug oder mit einem weiteren Presswerkzeug, das konzentrisch zum Werkzeug angeordnet ist, das das Einpressen des Zentrierstifts bewirkt, wird nun mittels eines entsprechenden Presswerkzeuges die Kerbe 36 im Material des Bauteils erzeugt, wobei durch Verdrängung des bisher in der Kerbe vorhandenen Materials das Material des Bauteils gleichzeitig zu der ringförmigen Lippe 38 umgeformt wird.

Die Anbringung des Zentrierstiftes in das Bauteil 20 kann auch in einem Folgeverbundwerkzeug erfolgen, indem in einer ersten Station die Stufenbohrung 22 durch einen Bohrvorgang erzeugt wird, in einer zweiten Station das Zentrierelement 10 in die Stufenbohrung eingesetzt wird und in einer dritten Station die Kerbe 36 ausgebildet wird. Es ist auch nicht zwingend erforderlich, die Stufenbohrung im Folgeverbundwerkzeug zu erzeugen, sondern das Bauteil mit der Stufenbohrung 22 könnte getrennt vom Folgeverbundwerkzeug hergestellt werden.

Der Bereich 26 der Stufenbohrung 22 hat vorzugsweise vor dem Einpressen des Schaftteils 16 des Zentrierstiftes 10 einen Durchmesser, der geringfügig kleiner ist als der Außendurchmesser des Schaftteils 16 des Zentrierstiftes. Mit anderen Worten wird der Zentrierstift mit einem Presssitz im Bauteil eingepresst. Hierdurch ist sichergestellt, dass der Schaftteil 16 des Zentrierstiftes spielfrei im Bauteil aufgenommen ist. Dies könnte nur mit Schwierigkeit dann sichergestellt werden, wenn der zweite Bereich 26 einen größeren Durchmesser aufweist als der Durchmesser des Schaftteils 16. Es ist also vorgesehen, dass mindestens eine hochwertige Passung zwischen dem Schaftteil 16 und dem zweiten Bereich 26 der Stufenbohrung 22 vorliegt oder vorzugsweise, dass ein Presssitz vorliegt.

Wenn in den Ansprüchen gesagt wird, dass der Kopfteil des Elementes eine größere Querabmessung und der Schaftteil eine kleinere Querabmessung aufweist, so berücksichtigt diese Formulierung, dass weder der Kopfteil noch der Schaftteil kreiszylindrisch ausgeführt werden müssen, sondern es wäre durchaus denkbar, den Kopfteil 12 und/oder den Schaftteil 16 im Bereich des Bauteils 20 mit sich in axialer Richtung erstreckenden Kanten und/oder Nuten zu versehen, die beim Einpressen in die Stufenbohrung zu einer formschlüssigen Verbindung mit dem Bauteil führen, gekoppelt mit einer entsprechenden Formgebung des Bauteils, die durch das Einpressen des Elementes entsteht. Mit einem Kopfteil mit Nuten oder mit Kanten würde dann eine Form vorliegen, die von einer Kreisform abweicht, dennoch aber Querabmessungen aufweist. Das gleiche gilt für den Schaftteil. Es würde aber, egal, welche konkrete Form für den Kopfteil bzw. für den Schaftteil gewählt wird, stets eine sich im Algemeinen radial erstreckende Anlagefläche zwischen Kopfteil und Schaftteil vorliegen, wobei die Bezeichnung "eine sich im Allgemeinen radial erstreckende Anlagefläche" nicht ausschließt, dass diese Fläche beispielsweise als Konusfläche vorliegen könnte, mit einer Komponente, die radial zur Längsachse des Elementes verläuft. In einem solchen Fall wäre es günstig, der abgesetzten Fläche der Stufenbohrung eine entsprechenden Formgebung zu geben.

Wenn eine von der Kreisform abweichende Gestaltung des Kopfteils 12 bzw. des Schaftteils 16 vorgesehen wird, so führt die formschlüssige Verbindung mit dem Material des Bauteils 20 zu einer hochwertigen Verdrehsicherung, was zwar bei einem Zentrierelement nicht erforderlich ist, aber bei einer Realisierung des Elementes als Bolzenelement durchaus nützlich sein könnte.

Es ist auch nicht zwingend erforderlich, dass die Kerbe 36 eine ringförmige Kerbe um die Achse 40 herum darstellt. Statt dessen könnte es ausreichen, eine Kerbe nur an einer Umfangsstelle des Randbereiches der Öffnung der Stufenbohrung 22 vorzusehen, wobei es besser wäre, mehrere winkelmäßig gleich verteilte Kerben im Randbereich vorzusehen.

Die Möglichkeit besteht auch, die Verpressung des Bauteils 20 im Bereich des Kopfteils 12 des Elementes so vorzunehmen, dass auch das Material des Kopfteils 12 lokal verformt wird. Hierdurch würde eine zusätzliche Verdrehsicherung mit dem entsprechend verformten Material des Bauteils entstehen. Eine weitere Möglichkeit, eine Verdrehsicherung zwischen dem Element und dem Bauteil zu erzeugen, liegt darin, Verdrehsicherungsnasen, beispielsweise solche, die sich in radialer Richtung erstrecken, an der Anlagefläche 30 vorzusehen, die beim Einpressen des Elements in das Material des Bauteils an der abgesetzten Fläche 28 eingedrückt wird.

Es ist auch nicht zwangsläufig erforderlich, dass die oberste Fläche der Stirnseite 14 bündig mit der Oberseite 17 des Bauteils 20 liegt. Die Fläche 14 könnte auch unterhalb der Fläche 17 liegen oder gar oberhalb der Fläche 17 stehen. Wichtig ist aber, dass eine Ausbildung des Kopfteils 12 vorliegt, die es ermöglicht, Material aus dem Bauteil in Überdeckung mit dem Kopfteil 12 zu bringen, um hierdurch die axiale Sicherung des Elementes im Bauteil zu gewährleisten. Eine solche Überdeckung findet im Beispiel der Fig. 2 im Bereich der gerundeten Schulter 32 und der Konusfläche 34 des Elements 10 statt, obwohl die Stirnfläche 14 selbst bündig mit der Fläche 17 liegt. Mit anderen Worten ist die axiale Länge des Kopfteils des Elements im Bereich der gerundeten Schulter 32 kleiner als die Tiefe des ersten Bereichs 24 der Stufenbohrung 22.

Es soll auch kurz zum Ausdruck gebracht werden, dass sich in axiale Richtung erstreckende Kanten gegebenenfalls am stiftartigen Element 10 durch einen Rändelvorgang erzeugt werden können. Es ist auch streng genommen nicht erforderlich, dass der Schaftteil 16 eine kreiszylindrische Form aufweist. Es könnte statt dessen eine mehreckige oder genutete Form vorgesehen werden, sofern dies für die Funktion des stiftartigen Elementes notwendig oder sinnvoll erscheint. Wenn eine solche Querschnittsform für das stiftartige Element gewählt wird, so kann es erforderlich sein, den Bereich 26 der Stufenbohrung durch einen Räumvorgang mit einer entsprechend geformten Räumnadel zu erzeugen.

Bei dem Bauteil 20 kann es sich um eine Platte aus Metall oder gar auch aus einem geeigneten Kunststoff handeln. Es kann sich aber auch um ein Gussteil handeln, das aus einem Gussmaterial besteht, das verformbar ist. Beispielweise kämen hier Gussteile aus Aluminium, Aluminiumdruckgussteile oder Gussteile aus Magnesium oder Stahl in Frage. Das Bauteil 20 könnte somit ein Teil eines Gehäuses sein, das aus einem entsprechenden Material angefertigt ist.

## Patentansprüche

1. Verfahren zur Anbringung eines stiftartigen Elements (10), z.B. eines Zentrierstifts oder eines Bolzenelements in ein Bauteil (20), beispielsweise in Form einer Platte oder eines Wandabschnitts eines Gehäuses, wobei das stiftartige Element (10) einen Kopfteil (12) mit einer größeren Querabmessung und eine Stirnseite (14) sowie einen Schaftteil (16) mit einer kleineren Querabmessung aufweist und der Kopfteil über eine sich zumindest im allgemeinen radial erstreckende Anlagefläche (30) in den Schaftteil (16) übergeht,
**dadurch gekennzeichnet,**
**dass** ein Element (10) ausgewählt wird mit einer axialen Länge des Kopfteils, die deutlich kleiner ist als die Dicke des Bauteils (20) an der Stelle der Anbringung des stiftartigen Elements, dass eine Stufenbohrung (22) im Bauteil erzeugt wird mit einem ersten Bereich (24) größeren Durchmessers, der den Kopfteil (12) des Elements aufnimmt und einem zweiten Bereich (26), der den Schaftteil (16) aufnimmt und einen Durchmesser aufweist, der gleich groß oder geringfügig kleiner ist als der Durchmesser des Schaftteils, wobei der erste Bereich (24) der Stufenbohrung eine Tiefe hat, die gleich groß oder etwas größer ist als eine Längenabmessung des Kopfteils (12) von der Stirnseite (14) zu der Anlagefläche (30) und dass im Randbereich des Bauteils um die Öffnung des Bereichs (24) der Stufenbohrung (22) größeren Durchmessers mindestens eine Kerbe (36) durch Materialverformung eingebracht wird, die zu einer Verschiebung von Material des Bauteils an mindestens einer Stelle (38) über die Stirnseite des Elements führt und das Element (10) auf diese Weise im Bauteil (20) in axialer Richtung sichert.

2. Verfahren nach Anspruch 1,
**dadurch gekennzeichnet,**
**dass** der Kopfteil (12) im Bereich der Stirnseite (14) eine abgerundete (32) und/oder konusförmige Schulter (34) aufweist, an der das verschobene Material (38) zur Anlage gebracht wird.

3. Verfahren nach Anspruch 1 oder 2,
**dadurch gekennzeichnet,**
**dass** die Stufenbohrung (22) so ausgeführt wird, dass die Stirnseite (14) des Elements (10) nicht über die dem Schaftteil (16) abgewandte Seite (17) des Bauteils hinausragt.

4. Verfahren nach Anspruch 1 oder 2,
**dadurch gekennzeichnet,**
**dass** die Stufenbohrung (22) so ausgeführt wird, dass die Stirnseite (14) des Elements (10) bündig mit der dem Schaftteil (16) abgewandten Seite (17) des Bauteils liegt.

5. Verfahren nach einem der vorhergehenden Ansprüche,
**dadurch gekennzeichnet,**
**dass** die Kerbe (36) ringförmig ausgeführt wird und dass sich das verschobene Material des Bauteils entsprechend ringförmig um die Stirnseite (14) des Kopfteils (12) erstreckt und diese im Randbereich überdeckt.

6. Verfahren nach einem der vorhergehenden Ansprüche 1 bis 4,
**dadurch gekennzeichnet,**
**dass** mehrere Kerben (36) im Bauteil (20) um die Längsachse (40) des Elements (10) herum vorgesehen werden und vorzugsweise zumindest im Wesentlichen gleichmäßig um diese Längsachse verteilt sind.

7. Verfahren nach einem der vorhergehenden Ansprüche,
**dadurch gekennzeichnet,**
**dass** bei einem Element, bei dem eine Verdrehsicherung erwünscht ist, entweder der Kopfteil und/oder der Schaftteil im Bereich des Bauteils mit sich in axialer Richtung erstreckenden Kanten und/oder Nuten versehen wird, die beim Einpressen in die Stufenbohrung zu einer formschlüssigen Verbindung mit dem Bauteil führen.

8. Verfahren nach Anspruch 4 und/oder 7,
**dadurch gekennzeichnet,**
**dass** bei der Verformung des Materials des Bauteils bei der Ausbildung der Kerbe(n) auch der Kopfteil des Elements stellenweise mit verformt wird, um eine Verdrehsicherung zu bilden.

9. Verfahren nach einem der vorhergehenden Ansprüche,
**dadurch gekennzeichnet,**
**dass** das Einpressen des Elements (10) in das Bauteil (20) **dadurch** erfolgt, dass das Bauteil (20) auf der Schaftteilseite des Elements (10) abgestützt wird, beispielsweise auf eine Matrize, die den aus dem Bauteil hinausragenden Schaftteil aufnimmt und dass auf die Stirnseite (14) des Elements und auf das Bauteil (20) im Bereich um den Kopfteil (12) herum mittels eines Werkzeugs eine Presskraft ausgeübt wird, die das Element bis zum Anschlag der Anlagefläche (30) an der abgesetzten Fläche (28) der Stufenbohrung (22) bringt und gleichzeitig oder anschließend die Kerbenbildung (36) und Materialverschiebung vornimmt.

10. Zusammenbauteil, bestehend aus einem stiftartigen Element (10), zum Beispiel einem Zentrierstift oder einem Bolzenelement und einem Bauteil, beispielsweise in Form einer Platte oder eines Wandabschnitts eines Gehäuses, wobei das stiftartige Element (10) einen Kopfteil (12) mit einer größeren Querabmessung und einer Stirnseite sowie einen Schaftteil (16) mit einer kleineren Querabmessung aufweist und der Kopfteil über eine sich im Allgemeinen radial erstreckende Anlagefläche (30) in den Schaftteil (16) übergeht,
**dadurch gekennzeichnet,**
**dass** der Kopfteil (12) des Elementes eine axiale Länge aufweist, die deutlich kleiner ist als die Dicke des Bauteils an der Stelle der Anbringung des stiftartigen Elements, dass im Bauteil eine Stufenbohrung (22) vorgesehen ist mit einem ersten Bereich (24) größeren Durchmessers, der den Kopfteil (12) des Elements aufnimmt und einem zweiten Bereich (26), der den Schaftteil (16) aufnimmt und einen Durchmesser aufweist, der dem Durchmesser des Schaftteils entspricht, wobei der erste Bereich (24) der Stufenbohrung eine Tiefe hat, die gleich groß oder etwas größer ist als eine Längenabmessung des Kopfteils (12) von der Stirnseite (14) zu der Anlagefläche (30) und dass im Randbereich des Bauteils um die Öffnung des Bereiches (24) der Stufenbohrung (22) größeren Durchmessers mindestens eine durch Materialverformung erzeugte Kerbe (36) vorliegt und benachbart zur Kerbe Material des Bauteils über die Stirnseite des Elements sich erstreckt und das Element (10) auf diese Weise im Bauteil in axialer Richtung sichert.

11. Zusammenbauteil nach Anspruch 10,
**dadurchgekennzeichnet**,
**dass** der Kopfteil (12) im Bereich der Stirnseite (14) eine abgerundete und/oder konusförmige Schulter (34) aufweist, an der das Material des Bauteils anliegt.

12. Zusammenbauteil nach Anspruch 10 oder 11,
**dadurch gekennzeichnet,**
**dass** die Stirnseite (14) des stiftartigen Elements (10) nicht über die dem Schaftteil (16) abgewandte Seite des Bauteils (20) hinausragt.

13. Zusammenbauteil nach Anspruch 10 oder 11,
**dadurch gekennzeichnet,**
**dass** die Stirnseite (14) des stiftartigen Elements (10) bündig mit der dem Schaftteil (16) abgewandten Seite (17) des Bauteils (20) liegt.

14. Zusammenbauteil nach einem der Ansprüche 10 bis 13,
**dadurch gekennzeichnet,**
**dass** die Kerbe (36) ringförmig ausgeführt ist und Material des Bauteils (20) sich ringförmig um die Stirnseite (14) des Kopfteils (12) erstreckt und diese im Randbereich überdeckt.

15. Zusammenbauteil nach einem der Ansprüche 10 bis 13,
**dadurch gekennzeichnet,**
**dass** mehrere Kerben im Bauteil um die Längsachse des Elementes herum vorgesehen und vorzugsweise zumindest im Wesentlichen gleichmäßig um diese Längsachse verteilt sind.

16. Zusammenbauteil nach einem der vorhergehenden Ansprüche 10 bis 15,
**dadurch gekennzeichnet,**
**dass** Kanten und/oder Nuten am Kopfteil und/oder am Schaftteil im Bereich des Bauteils vorgesehen sind und in einer formschlüssigen Verbindung mit dem Bauteil stehen.

17. Zusammenbauteil nach Anspruch 13 und/oder Anspruch 16,
**dadurch gekennzeichnet,**
**dass** der Kopfteil des Elements im Bereich der Kerbe im Bauteil verformt ist, wobei das an der Stelle der Verformung ineinander greifende Material des Bauteils und des Elements eine Verdrehsicherung bilden.

18. Zusammenbauteil nach einem der vorhergehenden Ansprüche 10 bis 17,
**dadurch gekennzeichnet,**
**dass** die Anlagefläche (30) des Elementes an der abgesetzten Fläche (28) der Stufenbohrung (22) anliegt.

19. Zentrierstift bei insbesondere zur Anwendung in einem Verfahren nach einem der Ansprüche 1 bis 9 oder bei zur Anwendung in einem Zusammenbauteil nach einem der Ansprüche 10 bis 18, wobei der Zentrierstift in eine Platte oder einen Wandabschnitt eines Gehäuses eingebracht wird, wobei das stiftartige Element einen Kopfteil (12) mit einer großen Querabmessung und einer Stirnseite (14) sowie einen Schaftteil (16) ohre Gewinde mit einer kleineren Querabmessung aufweist, wobei der Kopfteil (12) über eine abgerundete oder konusförmige Schulter (32, 34) im Bereich der Stirnseite (14) des Kopfteils in eine Stirnfläche des Kopfteils (12) übergeht.

## Claims

1. Method of attaching a pin-like element (10) for example a centring pin or a bolt element in a component (20), for example in the form of a plate or of a wall section of a housing, wherein the pin-like element (10) has a head part (12) with a larger transverse dimension and an end face (14) as well as a shaft part (16) with a smaller transverse dimension and wherein the head part merges via an at least generally radially extending contact surface (30) into the shaft part (16),
**characterized in that**
an element (10) is selected having an axial length of the head part which is significantly smaller than the thickness of the component (20) at the point of attachment of the pin-like element, **in that** a stepped bore (22) is produced in the component having a first region (24) of larger diameter which receives the head part (12) of the element and a second region (26) which receives the shaft part (16) and has a diameter which is of the same size as or fractionally smaller than the diameter of the shaft part, wherein the first region (24) of the stepped bore has a depth, which is the same size as or somewhat greater than a longitudinal dimension of the head part (12) from the end face (14) to the contact surface (30) and **in that** at least one notch (36) is introduced by material deformation in the edge region of the component around the opening of the region (24) of the stepped bore (22) of larger diameter which leads to a displacement of material of the component at at least one point (38) over the end face of the element and in this way secures the element (10) in the component (20) in the axial direction.

2. Method in accordance with claim 1,
**characterized in that**
the head part (12) has a rounded and/or conical shoulder (32) in the region of the end face (14) against which the displaced material (38) is brought into contact.

3. Method in accordance with claim 1 or claim 2,
**characterized in that**
the stepped bore (22) is so designed that the end face (14) of the element (10) does not project beyond the side (17) of the component remote from the shaft part (16).

4. Method in accordance with claim 1 or claim 2,
**characterized in that**
the stepped bore (22) is so designed that the end face (14) of the element (10) lies flush with the side (17) of the component remote from the shaft part (16).

5. Method in accordance with any one of the preceding claims,
**characterized in that**
the notch (36) is designed in ring-like shape and **in that** the displaced material of the component correspondingly extends in ring-like manner around the end face (14) of the head part (12) and overlaps the latter in the edge zone.

6. Method in accordance with one of the preceding claims 1 to 4,
**characterized in that**
a plurality of notches (36) are provided in the component (20) around the longitudinal axis (40) of the element (10) and are preferably at least substantially uniformly distributed around this longitudinal axis.

7. Method in accordance with one of the preceding claims,
**characterized in that**
with an element in which a security against rotation is desired, either the head part and/ or the shaft part is provided in the region of the component with edges and/or grooves extending in the axial direction which, on being pressed into the stepped bore, lead to a form-fitted connection to the component.

8. Method in accordance with claim 4 and/or claim 7,
**characterized in that**
during the deformation of the material of the component and the formation of the notch(s) the head part of the element is also deformed locally in order to form a security against rotation.

9. Method in accordance with any one of the preceding claims,
**characterized in that**
the pressing of the element (10) into the component takes place **in that** the component (20) is supported at the shaft side of the element (10) for example on a die button which receives the shaft part projecting out of the component and **in that** a pressing force is exerted on the end face (14) of the element and on the component (20) in the region around the head part (12) by means of a tool which brings the contact surface of the element into abutment with the step surface (28) of the stepped bore (22) and simultaneously or subsequently effects the notch formation (36) and the material displacement.

10. Component assembly comprising a pin-like element (10), for example a centring pin or a bolt element and a component, for example in the form of a plate or of a wall section of a housing, wherein the pin-like element (10) has a head part (12) with a larger transverse dimension and an end face, as well as a shaft part (16) with a smaller transverse dimension, and wherein the head part merges via a generally radially extending contact surface (30) into the shaft part (16),
**characterized in that**
the head part (12) of the element has an axial length which is significantly smaller than the thickness of the component at the point of attachment of the pin-like element, **in that** a stepped bore (22) is provided in the component having a first region of larger diameter which receives the head part (12) of the element and a second region (26) which receives the shaft part (16) and has a diameter which corresponds to the diameter of the shaft part, wherein the first region (24) of the stepped bore has a depth which is the same size as or somewhat larger than a longitudinal dimension of the head part (12) from the end face (14) to the contact surface (30) and **in that** at least one notch (36) produced by material deformation is present in the edge zone of the component around the opening of the region (24) of the stepped bore (22) of larger diameter and material of the component adjacent to the notch extends beyond the end face of the element and in this manner secures the element in the component in the axial direction.

11. Component assembly in accordance with claim 10,
**characterized in that**
the head part (12) has, in the region of the end face (14), a rounded and/or conical shoulder (34) which is contacted by the material of the component.

12. Component assembly in accordance with claim 10 or claim 11,
**characterized in that**
the end face (14) of the pin-like element (10) does not project beyond the side of the component (20) remote from the shaft part (16).

13. Component assembly in accordance with claim 10 or claim 11,
**characterized in that**
the end face (14) of the pin-like element (10) lies flush with the side (17) of the component (20) remote from the shaft part (16).

14. Component assembly in accordance with one of the claims 10 to 13,
**characterized in that**
the notch (36) is of ring-like design and material of the component (20) extends in ring-like manner around the end face (14) of the head part (12) and covers this over in the marginal zone.

15. Component assembly in accordance with one of the claims 10 to 13,
**characterized in that**
a plurality of notches are provided in the component around the longitudinal axis of the element and are preferably at least substantially uniformly distributed around this longitudinal axis.

16. Component assembly in accordance with any one of the claims 10 to 15,
**characterized in that**
edges and/or grooves are provided at the head part and/or at the shaft part in the region of the component and stand in a form-fitted connection with the component.

17. Component assembly in accordance with claim 13 and/or claim 16, **characterized in that**
the head part of the element is deformed in the region of the notch in the component, with a security against rotation being formed at the position of the deformation of the interengaging material of the component and of the element.

18. Component assembly in accordance with one of the preceding claims 10 to 17,
**characterized in that**
the contact surface (30) of the element contacts the step surface (28) of the stepped bore (22).

19. Centering pin for use in a method in accordance with one of the claims 1 to 9 or in a component assembly in accordance with any one of the claims 10 to 18, wherein the centring pin is introduced into a plate or a wall section of a housing, with the pin-like element having a head part (12) with a larger transverse dimension and an end face (14), as well as a shaft part (16) without thread and with a smaller transverse dimension, with the head part merging via a rounded or conical shoulder (32, 34) in the region of the end face (14) of the head part into an end face of the head part (12).

## Revendications

1. Procédé de montage d'un élément en forme de goupille (10), par exemple d'une goupille de centrage ou d'un élément goujon dans une pièce de construction (20) par exemple sous la forme d'un panneau ou d'un tronçon de paroi d'un boîtier, l'élément formant goupille (10) présentant une partie tête (12) de grande dimension transversale avec un côté frontal (14) ainsi qu'une partie tige (16) de petite dimension transversale, et la partie tête se transformant en la partie tige (16) via une surface d'appui (30) qui s'étend au moins généralement radialement,
**caractérisé en ce que**
l'on choisit un élément (10) dans lequel la partie tête présente une longueur axiale qui est nettement inférieure à l'épaisseur de la pièce de construction (20) à l'emplacement du montage de l'élément formant goupille, **en ce que** l'on réalise un perçage en gradin (22) dans la pièce de construction, qui présente une première zone (24) de grand diamètre recevant la partie tête (12) de l'élément ainsi qu'une seconde zone (26) recevant la partie tige (16) et présentant un diamètre égal ou légèrement inférieur au diamètre de la partie tige, la première zone (24) du perçage en gradin présentant une profondeur qui est égale ou légèrement supérieure à une dimension en longueur de la partie tête (12) depuis le côté frontal (14) jusqu'à la surface d'appui (30), et **en ce que** l'on réalise au moins une entaille (36) par déformation du matériau dans la région de bord de la pièce de construction autour de l'ouverture de la zone (24) du perçage en gradin (22) de grand diamètre, entaille qui mène à un déplacement du matériau de la pièce de construction à au moins un emplacement (38) par-dessus le côté frontal de l'élément et qui bloque de cette manière l'élément (10) en direction axiale dans la pièce de construction (20).

2. Procédé selon la revendication 1, **caractérisé en ce que** la partie tête (12) présente dans la région du côté frontal (14) un épaulement arrondi (32) et/ou un épaulement conique (34), contre lequel vient s'appuyer le matériau déplacé (38).

3. Procédé selon l'une ou l'autre des revendications précédentes, **caractérisé en ce que** le perçage en gradin (22) est réalisé de telle sorte que le côté frontal (14) de l'élément (10) ne dépasse pas au-delà du côté (17) de la pièce de construction détourné de la partie tige (16).

4. Procédé selon l'une ou l'autre des revendications précédentes, **caractérisé en ce que** le perçage en gradin (22) est réalisé de telle sorte que le côté frontal (14) de l'élément (10) est en affleurement avec le côté (17) de la pièce de construction détourné de la partie tige (16).

5. Procédé selon l'une des revendications précédentes, **caractérisé en ce que** l'entaille (36) est réalisée sous forme annulaire et **en ce que** le matériau déplacé de la pièce de construction s'étend en correspondance sous forme annulaire autour du côté frontal (14) de la partie tête (12) et recouvre celui-ci dans la région de bord.

6. Procédé selon l'une des revendications 1 à 4, **caractérisé en ce que** l'on prévoit plusieurs entailles (36) dans la pièce de construction (20) autour de l'axe longitudinal (40) de l'élément (10), qui sont de préférence réparties au moins sensiblement régulièrement autour de cet axe longitudinal.

7. Procédé selon l'une des revendications précédentes, **caractérisé en ce que** pour un élément pour lequel on souhaite un blocage anti-rotation, on pourvoit la partie tête et/ou la partie tige, dans la région de la pièce de construction, d'arêtes et/ou de gorges qui s'étendent en direction axiale et qui mènent à une liaison en coopération de formes avec la pièce de construction lors de l'enfoncement dans le perçage en gradin.

8. Procédé selon la revendication 4 et/ou 7, **caractérisé en ce que** pendant la déformation du matériau de la pièce de construction lors de la réalisation de la ou des entaille(s), la partie tête de l'élément est localement également déformée, afin de former un blocage anti-rotation.

9. Procédé selon l'une des revendications précédentes, **caractérisé en ce que** l'enfoncement de l'élément (10) dans la pièce de construction (20) s'effectue par le fait que la pièce de construction (20) est supportée sur le côté partie tige de l'élément (10), par exemple sur une matrice qui reçoit la partie tige dépassant hors de la pièce de construction, et **en ce que** l'on exerce au moyen d'un outil une force de pressage sur le côté frontal (14) de l'élément et sur la pièce de construction (20) dans la région autour de la partie tête (12), force qui amène l'élément aussi loin que la surface d'appui (30) vienne buter contre la surface décrochée (28) du perçage en gradin (22) et assure simultanément ou ensuite la formation de l'entaille (36) et le déplacement du matériau.

10. Composant d'assemblage constitué par un élément en forme de goupille (10), par exemple une goupille de centrage, ou un élément goujon, et par une pièce de construction (20) par exemple sous la forme d'un panneau ou d'un tronçon de paroi d'un boîtier, l'élément formant goupille (10) présentant une partie tête (12) de grande dimension transversale avec un côté frontal (14) ainsi qu'une partie tige (16) de petite dimension transversale, et la partie tête se transformant en la partie tige (16) via une surface d'appui (30) qui s'étend au moins généralement radialement,
**caractérisé en ce que**
la partie tête (12) de l'élément présente une longueur axiale qui est nettement inférieure à l'épaisseur de la pièce de construction à l'emplacement du montage de l'élément formant goupille, **en ce qu'**il prévu un perçage en gradin (22) dans la pièce de construction, qui présente une première zone (24) de grand diamètre recevant la partie tête (12) de l'élément ainsi qu'une seconde zone (26) recevant la partie tige (16) et présentant un diamètre qui correspond au diamètre de la partie tige, la première zone (24) du perçage en gradin présentant une profondeur qui est égale ou légèrement supérieure à une dimension en longueur de la partie tête (12) depuis le côté frontal (14) jusqu'à la surface d'appui (30), et **en ce qu'**au moins une entaille (36) est réalisée par déformation du matériau dans la région de bord de la pièce de construction autour de l'ouverture de la zone (24) du perçage en gradin (22) de grand diamètre, et, au voisinage de l'entaille, le matériau de la pièce de construction s'étend par-dessus le côté frontal de l'élément et bloque de cette manière l'élément (10) en direction axiale dans la pièce de construction.

11. Composant d'assemblage selon la revendication 10, **caractérisé en ce que** la partie tête (12) présente dans la région du côté frontal (14) un épaulement arrondi (32) et/ou un épaulement conique (34), contre lequel vient s'appuyer le matériau de la pièce de construction.

12. Composant d'assemblage selon l'une ou l'autre des revendications 10 et 11, **caractérisé en ce que** le côté frontal (14) de l'élément formant goupille (10) ne dépasse pas au-delà du côté de la pièce de construction (20) détourné de la partie tige (16).

13. Composant d'assemblage selon l'une ou l'autre des revendications 10 et 11, **caractérisé en ce que** le côté frontal (14) de l'élément formant goupille (10) est en affleurement avec le côté (17) de la pièce de construction (20) détourné de la partie tige (16).

14. Composant d'assemblage selon l'une des revendications 10 à 13, **caractérisé en ce que** l'entaille (36) est réalisée sous forme annulaire et **en ce que** le matériau de la pièce de construction (20) s'étend sous forme annulaire autour du côté frontal (14) de la partie tête (12) et recouvre celui-ci dans la région de bord.

15. Composant d'assemblage selon l'une des revendications 10 à 13, **caractérisé en ce qu'**il est prévu plusieurs entailles dans la pièce de construction autour de l'axe longitudinal de l'élément, qui sont de préférence réparties au moins sensiblement régulièrement autour de cet axe longitudinal.

16. Composant d'assemblage selon l'une des revendications 10 à 15, **caractérisé en ce qu'**il est prévu des arêtes et/ou des gorges sur la partie tête et/ou sur la partie tige dans la région de la pièce de construction, qui sont en liaison par coopération de formes avec la pièce de construction.

17. Composant d'assemblage selon la revendication 13 et/ou selon la revendication 16, **caractérisé en ce que** la partie tête de l'élément est déformée dans la région de l'entaille dans la pièce de construction, et **en ce que** le matériau de la pièce de construction et celui de l'élément, engagés l'un dans l'autre à l'emplacement de la déformation, forment un blocage anti-rotation.

18. Composant d'assemblage selon l'une des revendications 10 à 17, **caractérisé en ce que** la surface d'appui (30) de l'élément s'appuie contre la surface décrochée (28) du perçage en gradin (22).

19. Goupille de centrage pour l'application dans un procédé selon l'une des revendications 1 à 9 ou pour l'application dans un composant d'assemblage selon l'une des revendications 10 à 18, la goupille de centrage étant introduite dans un panneau ou dans un tronçon de paroi d'un boîtier, l'élément formant goupille présentant une partie tête (12) de grande dimension transversale et pourvu d'un côté frontal (14), ainsi qu'une partie tige (16) dépourvue de pas de vis et présentant une petite dimension transversale; la partie tête (12) se transformant en une surface frontale de la partite tête (12) via un épaulement arrondi ou conique (32, 34) dans la région du côté frontal (14) de la partie tête.
